# EUROPEAN PATENT SPECIFICATION

(11) **EP 0 477 583 B1**
(45) Date of publication and mention of the grant of the patent: **12.03.1997**
(21) Application number: 91114603.3
(22) Date of filing: 30.08.1991
(51) Int. Cl.: C12H 1/16, A23L 2/70

(54) **Apparatus for improving the quality of liquid foods**
Gerät zur Verbesserung der Qualität flüssiger Nährmittel
Appareil pour améliorer la qualité de liquides alimentaires

(30) Priority: 31.08.1990 JP 230237/90
(43) Date of publication of application: 01.04.1992
(73) Proprietor: BODYSONIC KABUSHIKI KAISHA, Shinjuku-ku, Tokyo (JP)
(72) Inventor: Komatsu, Akira, c/o Bodysonic K. K., Shinjuku-ku, Tokyo (JP)
(74) Representative: Füchsle, Klaus, Dipl.-Ing.

(56) References cited:
- EP-A- 336 262
- EP-A- 0 469 585
- DE-C- 743 822
- FR-A- 964 296
- US-A- 2 088 585
- US-A- 3 672 741

## Description

### BACKGROUND OF THE INVENTION

### Field of the Invention

The present invention relates to an apparatus for improving the quality of liquid foods, and this apparatus is capable of improving the taste of drinking water or liquor or the like (hereinafter referred to as "liquid foods") after such a liquid food is filled in a container, such as a bottle.

### Description of Prior Art

It has been discovered that vibrations given to liquid foods will improve the taste (i.e. quality) of the water or the liquor, and this effect has been tested in various quarters. In this case, vibrations are exerted externally to the drinking water while it is in the state of being filled up in a container, such as a bottle, but, as regards liquors, vibrations can be applied in the same manner in some cases, while an alternative method is employed in other cases for exerting vibrations to a liquor in the process of its fermentation in a fermentation tank (namely, in the case of a matured liquor, such as wine). Now, an example of the latter case is described below. At the wine center of Yamanashi Prefecture Industrial Technology center, a comparative experiment was conducted on fermentation, with two units of 200-liter fermentation tanks being used for the experimentation, one of these tanks being provided with electro-mechanical vibration transducers which furnish musical vibrations to the wine in the tank and the other of these tanks being used without any transducer mounted thereon. The musical signals fed to the electro-mechanical vibration transducers at that experiment is "Wine's Lullaby", which is a piece of wine brewing music composed by Mr. Toshio Fujiwara, a researcher in this field. Throughout the fermentation process, the sugar contents of the two samples of wine were compared for a total of five times on every other days with a refractive sugar content meter, which utilizes light for the measurement. As the result, it was found that the sample to which the musical vibrations had been given had a lower sugar content at each time of the measurements and showed a ratio of the inversion of sugar into alcohol higher by as much as 2.5 % than the other sample. Moreover, the number of days required for the fermentation were reduced by as much as two days. After the wine was kept laid down in its bottled state, it was tested by trial tasting and an organoleptic test, and the following results were obtained.
(1) It is a dry wine.
(2) It is rich in aroma and mellow.
(3) It showed a full rendition of a golden tone, which is often talked about with regard to white wine.
(4) It passed the throat, leaving a fresh and clean sensation.
(5) It gives a graceful taste and aroma.
(6) It gives a romantic story feature that the wine has been brewed while listening to music.

It has hitherto been said that cows will give a larger amount of milk if they are made to listen to music, and this is in actual practice in some places. In this case, the reason for the effectiveness of such a practice can be understood since the object of this practice is an animal. Yet, it has been held in question whether such a practice will ever be effective for wine. However, a remarkable effect was achieved with musical vibrations applied to wine by electro-mechanical vibration transducers installed on the fermentation tank mentioned above. It is conceivable that the theoretical clarification of this mechanism is as described below.

When the molecules of water is made smaller by the effect of vibrations, the water molecules become more vigorous in their activities, thereby attaining an activated state. The density of the water is increased, and the air present among the molecules of water is thereby reduced. By this, the anaerobic yeast fungi assume more vigorous activities, which results in a reduction of the fermentation period. The brewing of wine corresponds to this case. Also, it is possible that vibrations will produce the effect of pseudo-maturation. The water carried on a ship tastes well. Moreover, sailors would sail with a barrel of liquor tied for the captain onto the bow of the ship. It has been regarded as the captain's privilege to tie a barrel of liquor to the bow of his ship. The improved taste of the liquor is considered to reflect the effect which the liquor has gained while it has been shaken with the waves. The sailors have presumably learned from their experience over a long period of time that the bow is the best position for the liquor to take advantage of the effect. The bow is shaken with the waves. The waves will shake in a certain periodic characteristics - in large undulations at some times but in small undulations at other times and also quickly and slowly. Such shaking can be considered to have the "1/f fluctuation" characteristics (to be described later). The barrel of liquor tied onto the bow is shaken in a manner having the "1/f fluctuation" characteristics. The liquor in the barrel develops a well-rounded taste by the effect of a pseudo-maturation which is attained in a state similar to that of its maturation in consequence of vibrations (the liquor developing a molecular structure similar to that in its matured state as the result of the vibrations).

Now, a description is made of pseudo-maturation. In a freshly brewed liquor, the molecules of water and the molecules of alcohol are scattered and are in large sizes. In the case of a matured liquor, both the molecules of water and the molecules of alcohol have become smaller, and a combination of these molecules occurs in such a manner that the molecules of water envelope the molecules of alcohol. When there appears such a combination of the molecules as just described, the liquor has less of the sharp stimulative odor peculiar to ethyl alcohol and develops a well-rounded taste. A phenomenon similar to this occurs even with vibrations exerted to the liquor, and this phenomenon is called pseudo-maturation. How this phenomenon happens to water? Water becomes more tasty and also becomes more healthful. Now that it is water that occupies the largest percentage of the raw materials of foods, it is important from the viewpoint of both taste and health to prepare water having small molecules.

Now, a question arises here as to the point whether continuous waves in a constant waveform, as what is seen in the output signals from a low frequency generator or an ultrasonic wave generator, are better, or whether those signals which change in their levels and in their frequency, such as music, along with the elapse of time are better, as the source of signals to be used for such purposes as a reduction of the size of water molecules, producing an effect at the level of cells, and the brewing of wine. In this regard, the output signals from generators or the like are continuous waves which do not change either in their levels or in their frequency. On the other hand, music in many cases has the characteristics of "the 1/f fluctuation" which has a correlation to moderate changes. In this regard, the "1/f fluctuation" is used to represent the phenomenon of the measured values fluctuating around a certain mean value when various physical quantities are measured in physics. For human beings, "the 1/f fluctuation" is known as a pleasant stimulus with high affinity. It is as mentioned above that the ship's bow to which the captain has tied a barrel of liquor is shaken with the 1/f fluctuation.

A stimulus without any change in it tends to produce a weaker and weaker stimulative effect along with the passage of time. On the other hand, a stimulus which has appropriate changes accompanying it can maintain its stimulative effect. It is known that "the 1/f fluctuation" is at work at the level of cells and also at the level of water molecules (Professor Toshimitsu Musha at the Tokyo Institute of Technology), and, generally speaking, "the 1/f fluctuation" is found to be present in all the pacifying items existing in nature and can therefore be considered to be a phenomenon with a high degree of affinity to human beings. It is considered that there is a scientific ground in support of the use of music having the characteristics of the "1/f fluctuation" as a vibrating stimulus applied to the water molecules and yeast.

EP-A-0336262 and FR-A-964296 discloses methods of treatment of liquid foods with sonic or ultrasonic vibrations. The pre-characterising part of claim 1 below is based on this state of the art. An article entitled "what is the I/F fluctuation" appeared in the September 1990 issue of the Japanese periodical "Food Chemical".

The present inventor has completed an invention which improves the taste of drinking water, liquor, or soy sauce, as a result of repeated studies conducted from the viewpoint described above and has already filed an application for a patent (Patent Application No. EP-A-469585) under the title, "Method of Improving the Quality of Liquid Foods". However, the invention covered by the cited application relates to a method based on the result of inquiries into the mechanism of the process for improving the taste of drinking water, liquor, or the like, and, as regards specific means, the method works with means of exerting vibrations directly to a container after liquor or the like is filled up in the container, such as a bottle. Therefore, the present invention takes up as its object the provision of an apparatus which is capable of making improvements on the taste (quality) of the content of a container, such as a bottle indirectly after liquor or the like is filled in the container.

### SUMMARY OF THE INVENTION

As a means of overcoming the problems described above, the present invention proposes an apparatus for improving the quality of a liquid food, the apparatus being characterized by the technical features recited in claim 1 below.

The apparatus may comprise a mount base which, being made of wood or made of metal and formed of plate material, rod material, or pipe material, is used for placing thereon a container or containers filled with liquid food electro-mechanical vibration transducers installed on a lower part of the mount base defined above, and a source of low frequency signals such as music being connected to the electro-mechanical vibration transducers and also proposes an apparatus for improving the quality of a liquid food, the apparatus may further comprise a shelf for placing thereon a container or containers filled with liquid foods, electro-mechanical vibration transducers installed at one part, for example, the lower part, of the shelf just mentioned, and a source of low frequency signals such as music being connected to the above-mentioned electro-mechanical vibration transducers.

Thus, the apparatus according to the present invention, being in the constitution described above, is capable of improving the taste (i.e. quality ) of a liquid food filled in a container with an extremely simple operation which consists in applying vibrations with a source of low frequency signals such as music connected to electro-mechanical vibration transducers installed on a mount base or a shelf on which a container, such as a bottle, filled with the liquid food is placed.

### BRIEF DESCRIPTION OF THE DRAWINGS

Fig. 1 and Fig. 2 respectively present perspective view of one example of preferred embodiments of the present invention;
Fig. 3 presents a sectional view of an electro-mechanical vibration transducer;
Fig. 4 and Fig. 6 respectively present a perspective view illustrating another example of preferred embodiments of the present invention;
Fig. 5 presents a central sectional view of the embodiment shown in Fig. 4;
Fig. 7 presents a perspective view illustrating another example of preferred embodiments;
Fig. 8 presents a vertical sectional view of the preferred embodiment shown in Fig. 7;
Fig. 9 presents a perspective view illustrating still another example of preferred embodiments of the present invention;
Fig. 10 presents a vertical sectional view of the embodiment shown in Fig. 9;
Fig. 11 presents a perspective view illustrating another example of preferred embodiments; and
Fig. 12 presents a vertical sectional view of the embodiment shown in Fig. 11.

### DETAILED DESCRIPTION OF THE INVENTION

### Example of Preferred Embodiment of the Invention

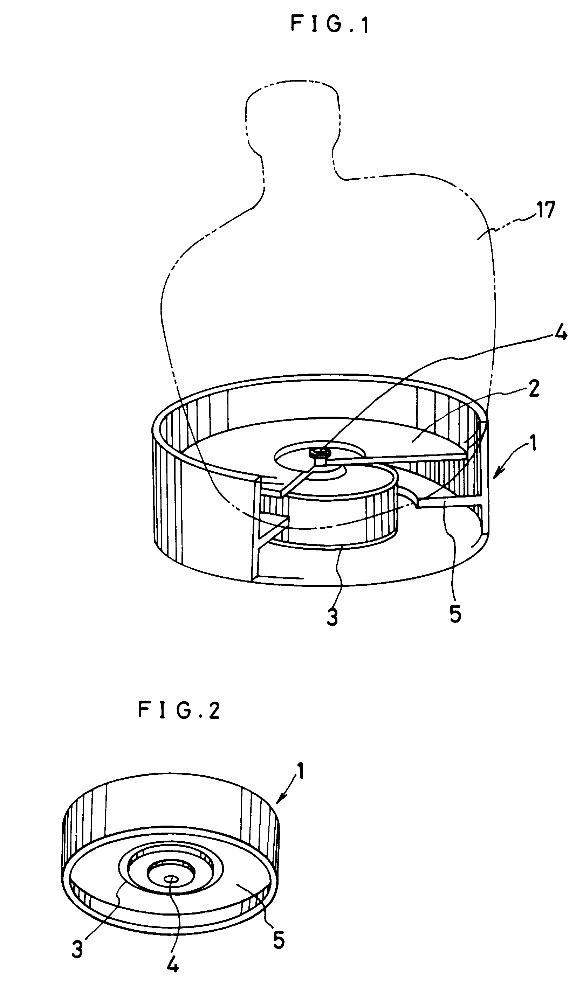

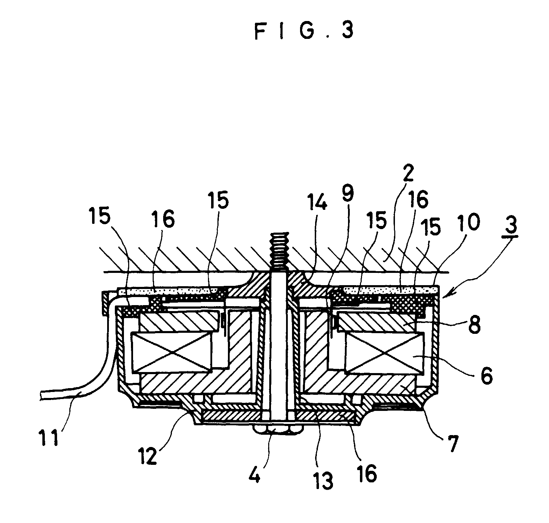

Now, a detailed description will be made of the constitution of the apparatus in embodiment of the present invention as illustrated in the accompanying drawings. In Fig. 1, the reference number 1 indicates a mount base,which has a round shape in its plane form, and, at a point slightly lower than the circumferential area, a vibrating plate 2 is provided, and, from the center of the lower part of this vibrating plate 2, an electro-mechanical vibration transducer 3 is suspended with a shaft 4. The reference number 5 indicates a bottom plate which has the function of placing restraint on the electro-mechanical vibration transducer 3 when the transducer has vibrated beyond a limit in the horizontal direction. The electro-mechanical vibration transducer 3 is a device which receives such low frequency signals as music, which are output signals from an acoustic equipment, and convert the signals into mechanical vibrations, and this transducer may be in any construction so long as it has this function. One of its example is shown in Fig. 3.

In Fig. 3, the reference number 6 indicates a magnet, which is to be used as a magnetic pole, and the reference numbers 7 and 8 respectively indicate yokes which are provided in such a manner as to hold the magnet 6 between them. The yoke 7 has a section in the shape of the letter T, as shown in the drawing, and the yoke 8 is in a doughnut shape. A magnetic gap is formed between the T-shaped column part of the yoke 7 and the yoke 8, and a coil 9 is arranged in this gap. The coil 9 receives the supply of electric power with the wire 11. When a low frequency signal (an electric current) such as a musical signal is fed from the wire 11 to the coil 9, a line of magnetic force generated in the coil 9 and a line of magnetic force generated in the magnet 6 produce the effect of their mutual interference, so that the forces reciprocally acting in the upward and downward directions as indicated in the drawing are generated alternately. The reference number 12 indicates a case, which contains the magnet 6 and the yokes 7 and 8, and, consequently, it will vibrate in one integrated block with the magnet 6 and the yokes 7 and 8 via damper (sponge) towards the side of a cap 14 which supports the coil 9. A hollow unit 13 is set to pass through the central part of the case 12, and a mounting shaft (bolt) 4 is passed through this hollow unit 13. The reference number 14 indicates a cap, and the reference numbers 15 and 16 respectively indicates a sponge.

When an electro-mechanical vibration transducer 3 with such a construction is installed on a vibrating plate 2 of a mount base 1, as shown in Fig. 1 and Fig. 2, with low frequency signals such as music being fed to the above-mentioned vibration transducer 3, the mechanical vibrations which the electro-mechanical vibration transducer 3 generates are transmitted from the shaft 4 to the vibrating plate 2. Accordingly, when a bottle 17 containing a liquor is placed on this vibrating plate 2, as shown in Fig. 1, the liquor (for example, whiskey) in the bottle 17 will receive vibrations in keeping with the music, namely, the "1/f fluctuation" described above, so that pseudo-maturation will be kept in progress, and the taste of the content (whiskey in this case) is thereby improved.

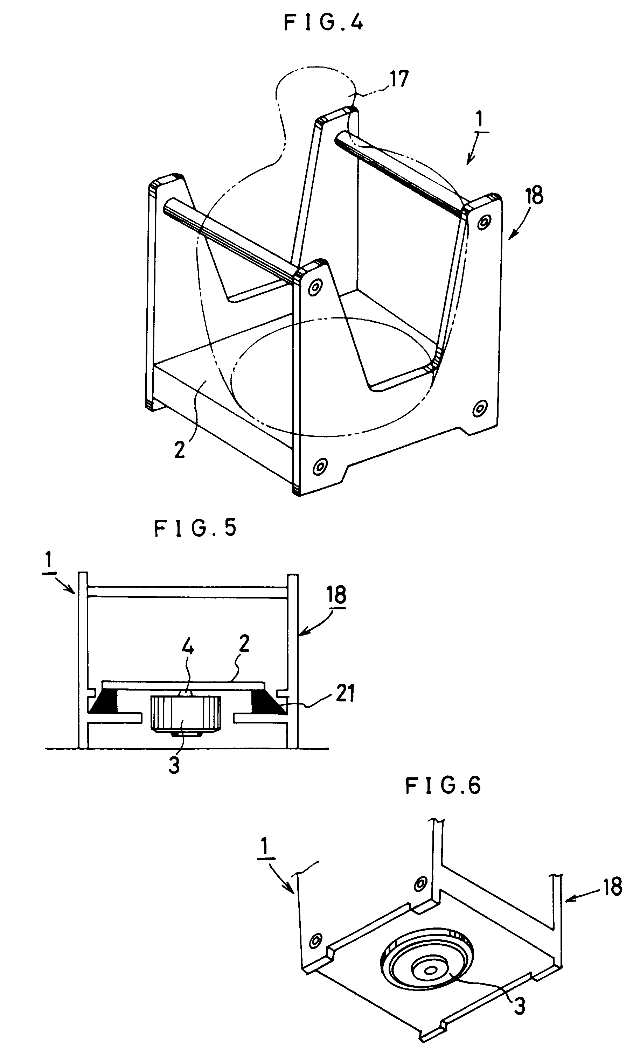

Fig. 4 through Fig. 6 respectively illustrate an apparatus featuring improved convenience in use with a handle provided on the mount base, and the overall structure of this apparatus is put together with a frame 18 made of wood plate material, and a vibrating plate 2 is installed as kept afloat with a bellows or a cushion material 21.

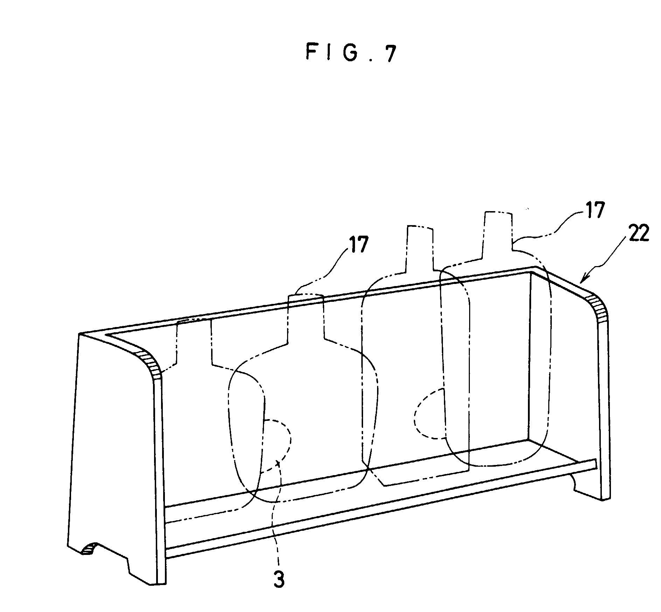

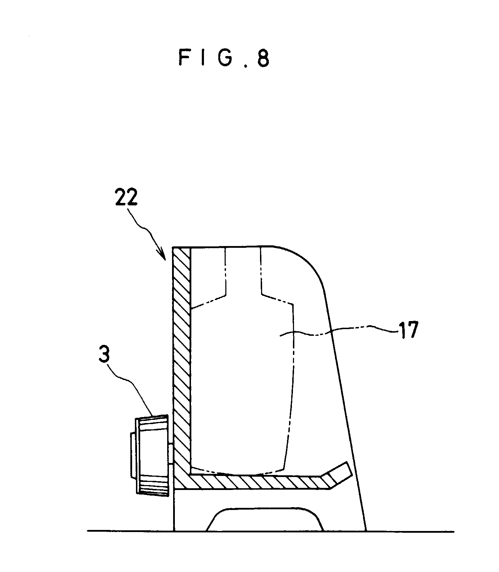

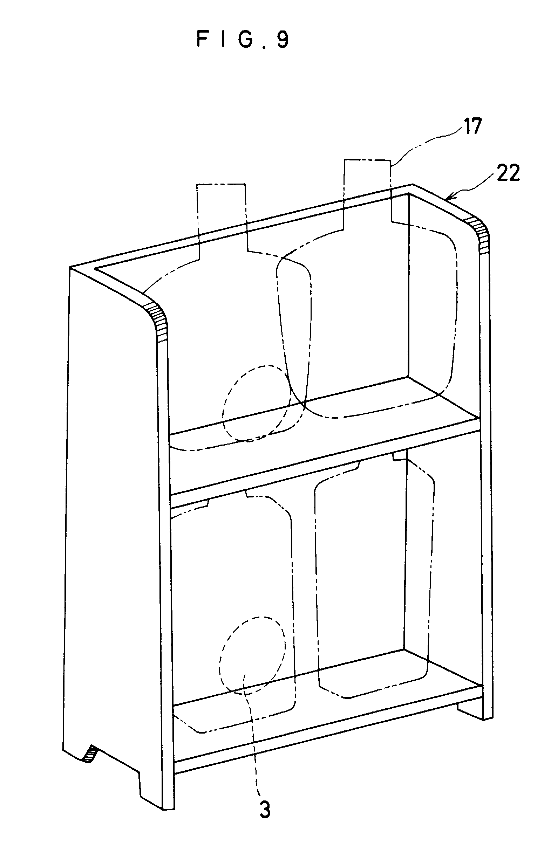

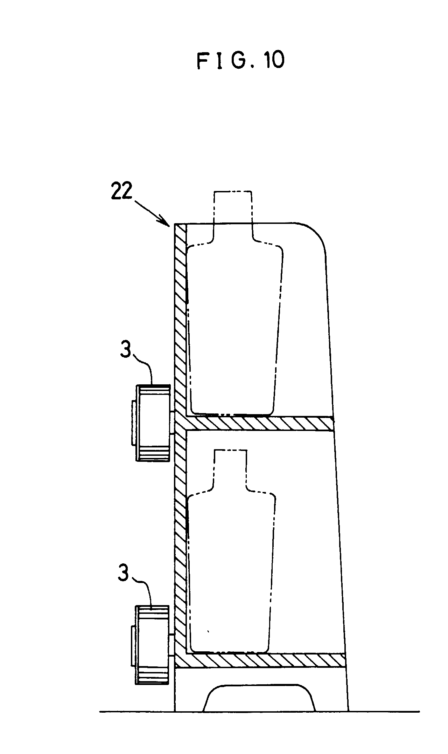

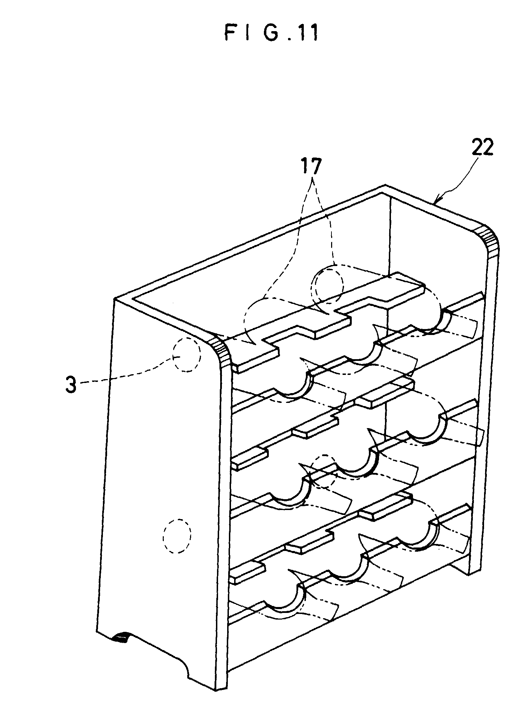

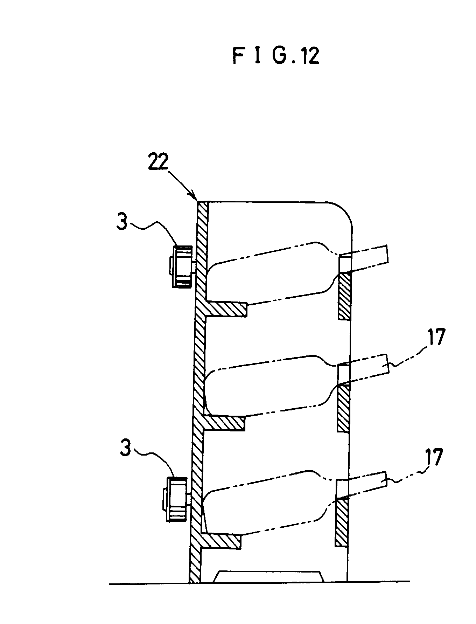

The constructions shown in Fig. 7 and the subsequent drawings are provided with electro-mechanical vibration transducers 3 installed on a shelf 22, and the constructions shown in Fig. 7 and Fig. 8 are so formed as to accommodate bottles 17 placed in a single row in the horizontal direction, and those constructions shown in Fig. 9 and Fig. 10 are formed in such a manner that they respectively accommodate bottles 17 stacked in two rows. In the case of these constructions, the electro-mechanical vibration transducers 3 are mounted on the back of the shelf 22. The constructions shown in Fig. 11 through Fig. 12 are formed in such a way that the shelves 22 are set up in multiple stages. In the case of these constructions, it is necessary to take such measures as the employment of electro-mechanical vibration transducers with large output or an increase of their number (refer to Fig. 11) in consideration of their capability of transmitting their Vibrations to the entire construction, and yet the fundamental features of these constructions are not changed from what has been described so far.

Each and all of the constructions cited in the individual examples of preferred embodiments above are not to be limited to bottles 17 containing liquor, but the bottles may be those filled up with drinking water instead. In the state where this bottle 17 is placed on a mount base 1 or a shelf 22, the electro-mechanical vibration transducer 3 is connected to the output side of an acoustic equipment, and, with musical signals generated through reproduction of an appropriate piece of music, vibrations are given to the bottle 17. With these vibrations, the liquor or drinking water in the bottle 17 is vibrated, and an improvement will be achieved on the taste (i.e. quality) in accordance with the principle described above. As it does not necessarily follow that stronger vibrations are better, it is appropriate to search experimentally for a value most suitable for an output level to be set up as appropriate. In such a case where a plural number of electro-mechanical vibration transducers 3 are to be installed on the shelf 22, the effect of the electro-mechanical vibration transducers 3 may be enhanced, depending on the circumstances, by reversing the phases (namely, reversing the connections) of the vibration transducers 3 located in remote positions.

As described hereinabove, the present invention provedes an apparatus for improving the quality of a liquid food, wherein the apparatus is characterized by comprising a mount base which is used for placing thereon a container or containers filled with a liquid food, electro-mechanical vibration transducers installed on a lower part of the mount base defined above, and a source of low frequency signals such as music being connected to the electro-mechanical vibration transducers, and also provides an apparatus for improving the quality of a liquid food, wherein the apparatus is characterized by comprising a shelf or shelves for placing thereon a container or containers filled with liquid foods, electro-mechanical vibration transducers installed at one part, for example, the lower part, of the shelf just mentioned, and a source of low frequency signals such as music being connected to the above-mentioned electro-mechanical vibration transducers. Thus, the apparatus according to the present invention will be capable of making remarkable improvements on the taste (i.e. quality) of drinking water or liquor filled in a container as it can give vibrations for producing "the 1/f fluctuation" in the drinking water or the liquid because the apparatus can actually apply the technique on which EP-A-469585 has already been filed under the title, "Method of Improving the Quality of Liquid Food," to drinking water or liquor in its state of being filled in a container, by feeding low frequency signals of music or the like (including sounds other than music) to the electro-mechanical vibration transducers.

## Claims

1. Apparatus for improving the quality of a liquid food, wherein the apparatus comprises a mount base for placing thereon a container or containers filled up with liquid foods, an electro-mechanical vibration transducer installed on part of the mount base defined above, and a source of low frequency signals, that is, in the acoustic range, connected to the electro-mechanical vibration transducer, the apparatus being characterised in that:
i. the source of signals generates signals which change in their levels and in their frequency; and
ii. the transducer has a case (12) which contains yokes (7, 8) and a coil (9) which receives the low frequency signals thereby causing the case (12) to vibrate, and a shaft (4) which protrudes from the case (12) and by means of which the vibrations generated in the transducer by the low frequency signals are transferred to the mount base.

2. Apparatus according to claim 1, wherein the mount base consists of a side plate and a vibrating plate formed in one integrated structure with electro-mechanical vibration transducer fixed on its lower side.

3. Apparatus according to claim 2, wherein the vibrating plate defined above is installed on the side plate with a cushion material provided between them.

4. Apparatus as claimed in claim 1, 2 or 3 wherein the mount base is a shelf.

5. Apparatus according to claim 4, wherein the shelf defined above is formed into multiple stages.

6. Apparatus according to claim 4 or 5, wherein the electro-mechanical vibration transducers installed on one part of the shelf is in a plural number of pieces.

7. Apparatus according to claim 6, wherein the one part of the shelf defined above is a side plate or a back plate.

## Patentansprüche

1. Vorrichtung zum Verbessern der Qualität eines flüssigen Nahrungsmittels, worin die Vorrichtung umfaßt eine Befestigungsgrundplatte, um darauf einen Behälter oder mehrere Behälter zu setzen, die mit flüssigen Nahrungsmitteln gefüllt sind, einen elektro-mechanischen Vibrationsüberträger, der auf einem Teil der oben definierten Befestigungsgrundplatte eingerichtet ist, und eine Quelle von Niederfrequenzsignalen, d.h. in dem akustischen Bereich, die mit dem elektro-mechanischen Vibrationsüberträger verbunden ist, wobei die Vorrichtung dadurch gekennzeichnet ist, daß
i. die Signalquelle Signale erzeugt, die in ihren Pegeln und ihren Frequenzen sich ändern; und
ii. der Überträger ein Gehäuse (12) besitzt, das enthält Anker (7, 8) und eine Spule (9), welche die Niederfrequenzsignale empfängt und dabei das Gehäuse (12) dazu bringt, zu vibrieren, und einen Schaft (4), der von dem Gehäuse (12) vorsteht, und durch den die in dem Überträger durch die Niederfrequenzsignale erzeugten Vibrationen auf die Befestigungsgrundplatte übertragen werden.

2. Vorrichtung gemäß Anspruch 1, worin die Befestigungsgrundplatte aus einer Seitenplatte und einer Vibrationsplatte besteht, die in einem gemeinsamen Aufbau mit dem auf ihrer unteren Seite befestigten elektro-mechanischen Vibrationsüberträger gebildet sein.

3. Vorrichtung gemäß Anspruch 2, worin die oben definierte Vibrationsplatte auf der Seitenplatte mit einem zwischen diesen vorgesehenen Dämpfungsmaterial eingerichtet ist.

4. Vorrichtung gemäß Anspruch 1, 2 oder 3, worin die Befestigungsgrundplatte ein Gestell ist.

5. Vorrichtung gemäß Anspruch 4, worin das oben beschriebene Gestell in vielen Stufen gebildet ist.

6. Vorrichtung gemäß Anspruch 4 oder 5, worin die elektro-mechanischen Vibrationsüberträger, die auf einem Teil des Gestelles eingerichtet sind, in einer Mehrzahl von Stücken sind.

7. Vorrichtung gemäß Anspruch 6, worin das oben definierte eine Teil des Gestelles eine Seitenplatte oder eine Rückplatte ist.

## Revendications

1. Appareil pour améliorer la qualité d'un liquide alimentaire, dans ,lequel l'appareil comprend une base de montage pour placer sur son dessus un ou plusieurs conteneurs remplis de liquides alimentaires, un transducteur de vibrations électro-mécaniques installé sur une partie de la base de montage définie ci-dessus, et une source de signaux basse fréquence, c'est-à-dire, dans la gamme acoustique, connectée au transducteur de vibrations électro-mécaniques, l'appareil étant caractérisé en ce que :
i. la source de signaux engendre des signaux qui changent dans leurs niveaux et leur fréquence; et
ii. le transducteur comporte un boîtier (12) qui contient des culasses (7, 8) et une bobine (9) qui reçoit les signaux basse fréquence, ce qui a pour effet de faire vibrer le boîtier (12), et un arbre (4) qui est en saillie sur le boîtier (12) et au moyen duquel les vibrations engendrées dans le transducteur par les signaux basse fréquence sont transférés à la base de montage.

2. Appareil selon la revendication 1, dans lequel la base de montage est constituée d'une plaque latérale et d'une plaque vibrante constituant une structure. intégrée avec le transducteur de vibrations électro-mécaniques fixé sur son côté inférieur.

3. Appareil selon la revendication 2, dans lequel la plaque vibrante définie ci-dessus est installée sur la plaque latérale avec un matériau d'amortissement monté entre elles.

4. Appareil selon la revendications 1, 2 ou 3, dans lequel la base de montage est une étagère.

5. Appareil selon la revendication 4, dans lequel l'étagère définie ci-dessus comporte plusieurs étages.

6. Appareil selon la revendication 4 ou 5, dans lequel les transducteurs de vibrations électro-mécaniques installés sur une partie de l'étagère constituent une pluralité de pièces.

7. Appareil selon la revendication 6, dans lequel la partie de l'étagère définie ci-dessus est une plaque latérale ou une plaque arrière.
